# EUROPEAN PATENT APPLICATION

(11) **EP 0 543 579 A1**
(43) Date of publication of application: **26.05.1993**
(21) Application number: 92310389.9
(22) Date of filing: 13.11.1992
(51) Int. Cl.: C02F 1/28, C02F 3/12, C02F 1/72

(54) **Removing pesticide residues from water**

(30) Priority: 16.11.1991 GB 9124404
(71) Applicant: Southern Water Technologies Limited, Worthing, West Sussex BN13 3NX (GB)
(72) Inventor: Ford, Gordon Stephen, Angmering, West Sussex BN16 4DZ (GB)
(74) Representative: Topley, Paul

(57) **Abstract**

There is described a method of water purification wherein granular activated carbon is held in suspension in a body of water to be treated, untreated water being continuously added to the body and treated water being continuously drawn off, the spent carbon drawn off with the treated water being replenished either continuously or batchwise with regenerated activated carbon granules. Preferably, the process is carried out as a multistage process with the treated water from a first tank being fed to a second and possibly subsequent tanks, spent carbon being removed from the first tank and replenished by carbon taken from the next downstream tank, the final downstream tank being replenished with fresh carbon material.

## Description

The present invention relates to water purification, and is particularly concerned with a means of removing pesticide residues and other organic substances from water. The objective of the process is to remove or reduce such substances to a level which enables the treated water to comply with the water quality regulations, or reduces the level to a point where further treatment can be given to attain the required levels.

Water filtration by passing the water through a bed of granulated activated carbon is known, but this system suffers from the disadvantage that after a period of time the activated carbon loses its effectiveness, and the filtration plant has to be shut down for the activated carbon to be removed and replaced with a fresh or a regenerated stock of filter medium. This interruption of the operation of the filtration plant necessitate: the provision of expensive back-up plant for use when the activated carbon filters are in the process of replacement.

In order to overcome the problem of replacement of activated carbon filter medium, the present invention proposes a plant in which granular activated carbon is held in suspension in a body of water to be treated, raw water being added to the plant and filtered water being drawn off the plant in a continuous process. A proportion of the granular activated carbon exits from the filter plant with the treated water, from which it is recovered for regeneration. Fresh or regenerated activated carbon is continuously added to the plant to keep the amount of activated carbon in the plant substantially constant.

Preferably, the volume of the plant and the flow rate of water to be treated is regulated to give an average residence time of the water to be treated of from five minutes to two hours, and most preferably approximately one hour. The amount of activated carbon is adjusted so that its residence time in the plant is from about 50 hours to approximately ten days, depending on the consumption rate of carbon which is itself governed by the impurity loading of the water. These two control parameters, residence time of water being treated and residence time of granulated activated carbon, must then be adjusted to give the optimal operating conditions for the plant.

According to a further aspect of the invention, there is provided a method of water purification comprising holding activated carbon in suspension in a body of water to be treated, while continuously adding untreated water and fresh activated carbon to the body of water, while simultaneously drawing off treated water and spent carbon. The carbon is preferably in granular form, but powdered activated carbon may also be used.

A example of a plant operating a method according to the present invention will now be described in detail, with reference to the accompanying drawing which is a sectional view of a plant.

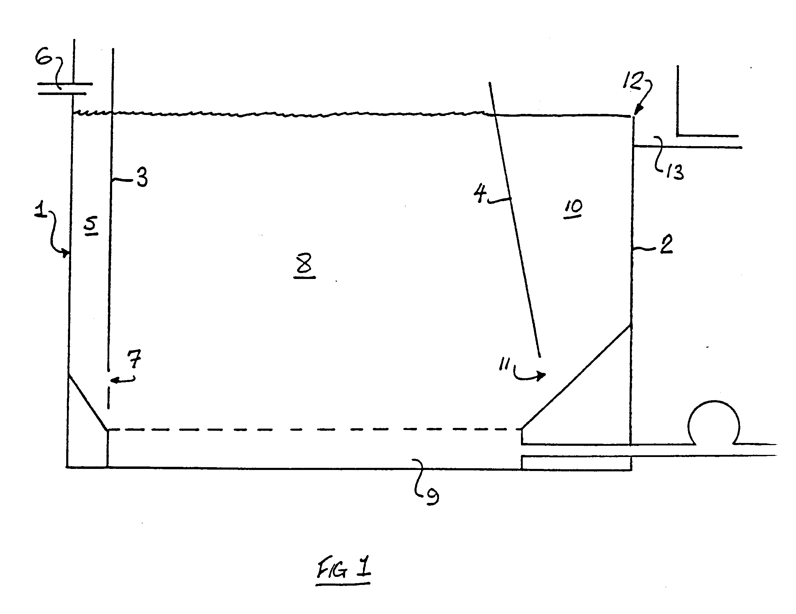

Referring now to Figure 1, the plant comprises side walls 1 and 2, and is divided into three interior zones by means of dividing walls 3 and 4. Between side wall 1 and dividing wall 3 is an inlet zone 5, which is fed with raw water via an inlet pipe 6. An inlet opening 7 at the lower end of the inlet zone 5 allows raw water to enter an aeration zone 8 situated between the dividing walls 3 and 4.

The bottom of the aeration zone is formed by an aeration panel, through which air or other gas may be bubbled to maintain the granular activated carbon in suspension in the liquid within the aeration zone 8. As an alternative to an aeration panel 9, the activated carbon may be held in suspension by means of stirrers or circulating pumps which agitate the body of liquid in the aeration zone 8.

Between the dividing wall 4 and the side wall 2 is a settlement zone 10, into which treated water may enter via an opening 11 at the lower end of the settlement zone. Treated water then flows through the settlement zone, where a proportion of the suspended carbon settles out, and eventually exits the settlement zone over a weir 12 at the upper end of side wall 2 to an outlet channel 13. The outflow carries the unsettled carbon with it over the weir 12.

In the aeration zone 8, a quantity of granular activated carbon is held in suspension, either by an aeration panel or by stirrers as previously described. The granules of activated carbon become entrained with the water flow through the unit, and a proportion of the activated carbon is carried through the settlement zone 10 to the outlet channel 13. This spent carbon is removed from the treated water and may be regenerated either batchwise or as a continuous process in a regeneration oven (not shown). The regenerated activated carbon granules are then added to the plant, either by adding them to the inlet zone 5 or directly to the aeration zone 8. This addition can be either batchwise, or as a continuous stream of regenerated activated carbon.

The amount of activated carbon which is removed for regeneration each day will depend on various factors, since the water must be in contact with activated carbon for sufficient time to ensure complete removal of pesticides, but excess contact times must be avoided in order to minimise capital costs in the equipment.

As an example, there follows a calculation of the amount of activated carbon it is necessary to remove, regenerate and add each day in a plant. If one assumes a flow (F) of 132 cubic metres of water through the plant per day, using an aeration zone of 5.5 cubic metres and aiming to retain the water in the aeration zone for one hour (RW) for treatment with a residence time (Rc) of the activated carbon in the aeration zone of ten days, then using a water where the consumption rate of activated carbon (Cc) is 0.023 kilograms per cubic metre of water treated, then the weight of activated carbon in aeration is found to be [(Cc)x(F)x(Rc)]kg, i.e. 0.023 x 132 x 10 = 30.36 kilograms. This gives a concentration of 5.52 kilograms per cubic metre, or 5,520 milligrams per litre, in the 5.5 cubic metre aeration zone.

This figure gives a zero amount of active granular carbon in the granular carbon material leaving the plant through the outlet, and this is undesirable since it is the limiting case. In order to achieve an amount of active granular carbon in the outlet of 3.036 kilograms (1 day's supply of activated carbon), then the amount of activated carbon in aeration will have to be raised to 33.4 kilograms, and the daily addition and removal rate of carbon will be raised to 3.34 kilograms per day.

Clearly, the amount of activated carbon necessary for the plant will depend on the impurity loading of the water to be treated, the flow rate of the water, and the residence time of the activated carbon in the plant. Once the mean daily requirement for activated carbon has been found, by multiplying the daily flow rate with the requirement per cubic metre (Cc) and the residence time (Rc) of the carbon, then the amount of carbon required to be present for a zero active carbon level at the outlet can be calculated, and a sufficient safety factor added to this figure in order to ensure that there is always sufficient active carbon present in the filter to remove impurities from the water.

In order to ensure that peaks of high concentrations of pesticides do not 'swamp' the plant, i.e. use up all the available active granular activated carbon and thus cause essentially untreated pesticide to pass through the plant, the plant may consist of a series of cells. In this way the first cell can be operated in a mode described above, with no active granular carbon at the outlet. Granular carbon leaving this cell would always be completely used. A second, downstream cell would contain granular activated carbon, partly used as a result of peaks passing through the first cell, and there could be a further cell or cells containing substantially unused granular activated carbon to ensure complete removal of pesticides. In order to achieve this mode of operation new or regenerated granular activated carbon would be added to one of the downstream cells, an equivalent weight of granular activated carbon would be removed from this cell and passed to the next upstream cell, an equivalent weight of granular activated carbon would be removed from that cell and passed to the next upstream cell, and so on until the first cell has removed from it a quantity of spent granular activated carbon. Spent granular activated carbon removed from the first cell could be either discarded or regenerated. In other words the plant would consist of a series of cells with new or regenerated granular activated carbon being added at or near the outlet end of the plant and spent granular activated carbon being removed from the most upstream cell.

The use of a suspension of granular activated carbon as a purification medium may have further advantages, in addition to the possibility of continuous operation. Firstly, it is possible that a biological film may establish itself on the carbon granules, and act to break down organic materials present in the water. It is also possible that bacteria capable of feeding on pesticides will form in the biological film, and thus reduce the requirement for granular activated carbon.

If aeration is used to suspend the activated carbon, it is possible that the air may strip out carbon dioxide from the water and thus raise its pH and reduce the corrosiveness of the water. However, reduction in the CO₂ content of the liquor leads to greater likelihood that calcium carbonate deposition will occur. It is therefore proposed, in a development of the invention, to add CO₂ to the air supply for suspending the activated carbon. To reduce the wastage of CO₂ gas, the aeration zone may be covered and the aerating air supply may be drawn from the headspace over the aeration zone, thus recycling the CO₂. A small addition of CO₂ to the recycled stream may be necessary to ensure that CO₂ removal from the liquor does not lead to deposition of calcium carbonate. The recycled air stream may be filtered to remove volatile organic compounds, and may have fresh air added to replace any which dissolves in the liquor.

By keeping the activated carbon in suspension for a period of, for example, ten days it is possible that nitrifying bacteria will establish in the biological film, further reducing the chlorine demand on the treated water.

## Claims

1. A method of water purification comprising holding granular activated carbon in suspension in a body of water (8) to be treated, adding untreated water and fresh activated carbon to the body of water, and simultaneously drawing off treated water and spent carbon.

2. A method according to Claim 1, wherein the body of water to be treated is contained in a tank (2), and is agitated to maintain the granular activated carbon in suspension.

3. A method according to Claim 1, wherein the granular activated carbon is held in suspension by aerating the body of water.

4. A method according to Claim 3, wherein carbon dioxide is added to the aerating gas stream.

5. A method according to Claim 4, wherein the body of water to be treated is held in an enclosed vessel and the aerating gas stream is drawn from a head space within the vessel so as to recycle the aerating gas.

6. A method according to Claim 5, wherein the aerating gas is air, and carbon dioxide is added to the recycled stream optionally in addition to fresh air to replace air dissolved in the body of water.

7. A method according to any preceding Claim, wherein the addition of untreated water and fresh activated carbon and the withdrawal of treated water and spent carbon take place substantially continuously.

8. A method according to any preceding Claim, wherein the water to be treated passes through a first treatment tank wherein granular activated carbon is held in suspension in the water, the treated water drawn off the first treatment tank being passed to a second treatment tank wherein granular activated carbon is held in suspension in the water and wherein spent carbon exiting the second treatment tank with the treated water is replaced with fresh activated carbon.

9. A method of treating water comprising passing the water to be treated through a series of treatment tanks in each of which activated carbon granules are held in suspension in the water and wherein periodically or continuously a quantity of spent carbon is removed from the upstream tank and is replaced by a like quantity of activated carbon taken from the next downstream tank, and wherein the final tank is replenished with a fresh supply of activated carbon.

10. A method according to any preceding Claim, wherein the residence time of the water in the treatment tank or treatment tanks is between five minutes and two hours.

11. A method according to any preceding Claim, wherein the residence time of the activated carbon in each tank is from 50 hours to approximately 10 days.

12. A treatment tank for carrying out the method according to any preceding Claim, wherein the treatment tank is divided into an inlet zone (5) having an inlet (6) for water to be treated, an agitation zone (8) having means (9) for agitating a body of water to be treated, and a settlement zone (10) having an exit (12, 13) for treated water, the inlet zone (5), agitation zone (8) and settlement zone (10) being in fluid communication (7, 11), and the agitation zone (8) including means (9) to maintain granulated activated carbon in suspension in the body of water to be treated.

13. Apparatus according to Claim 12, wherein the means to maintain the granulated activated carbon in suspension comprises a circulating pump and/or stirrer.

14. Apparatus according to Claim 12, wherein the means for maintaining the granular activated carbon in suspension comprises means (9) to aerate the body of water.

15. Apparatus according to Claim 14, wherein atmospheric air is bubbled through the body of water to maintain the granular activated carbon in suspension.

16. Apparatus according to Claim 15, wherein carbon dioxide is added to the atmospheric air to be bubbled through the body of water to be treated.

17. Apparatus according to Claim 15 or Claim 16, wherein the body of water to be treated is held in a closed vessel having a head space, and the air to be bubbled through the body of water is drawn from the head space.

18. Apparatus according to Claim 16, wherein carbon dioxide and/or fresh air are added to the recycling air stream.
